# EUROPEAN PATENT SPECIFICATION

(11) **EP 1 723 761 B1**
(45) Date of publication and mention of the grant of the patent: **03.12.2008**
(21) Application number: 04709271.3
(22) Date of filing: 09.02.2004
(51) Int. Cl.: H04L 29/06, H04L 29/08

(54) **SYSTEM ARCHITECUTE FOR LOAD BALANCING IN DISTRIBUTED MULTI-USER APPLICATION**
SYSTEMARCHITEKTUR ZUM LASTAUSGLEICH IN EINER VERTEILTEN MEHRBENUTZER-ANWENDUNG
ARCHITECTURE DE SYSTEME EQUILIBRANT LA CHARGE DANS UNE APPLICATION A PLUSIEURS USAGERS REPARTIS

(43) Date of publication of application: 22.11.2006
(73) Proprietor: Martin, Adam, Brighton BN1 3RB (GB); Allen, Rosemary, Merton Norfolk IP25 6QT (GB)
(72) Inventor: MARTIN, Adam, West Sussex RH13 8HE (GB)
(74) Representative: Benson, Christopher
(86) International application number: PCT/GB2004/000513
(87) International publication number: WO 2004/071050

(56) References cited:
- WO-A-00/33536
- US-A1- 2002 032 777
- US-A1- 2002 069 279

## Description

The present invention relates to a system architecture and engine for a massively multi-user application with which it is capable of performing an application involving users at remote locations by using a network such as internet or satellite cellphone network, and an application server capable of executing the application, the method for massively multi-user application, a user terminal therefor, data files comprising data and statistics generated from the application, and a machine readable medium comprising software therefor including a storage medium storing an application program capable of executing the application method. More particularly the invention relates to a distributed operating architecture and system.

The present invention addresses a market need to coordinate internet gaming interaction. Traditionally internet games operate with use of a user pc which displays information to the player and a gaming server or "engine" which runs and co-ordinates the game. Important performance features in playing a good internet game are speed of response to any move, also termed low latency, and accuracy of response, ie not losing player moves. In certain games it also enhances the game effect by playing with many players and these are termed massively multiplayer on-line (MMO) games.

Players in a multiplayer game provide entertainment for each other, through social interaction, and challenging competition. This has proved to produce highly addictive gameplay, in addition to infinite variety in the end-user experience.

The problem with providing such games is the massive concurrent data transactions taking place, which impose high memory and speed demands. Indeed in such games, in the event of too many players logging on to play, not only will response speed slow to lose the game effect, but it is possible that the server becomes overloaded and crashes. The operating system for such games may need to handle player interactions or events hundreds of times per second, regardless of triviality or complexity of the event. Generic approaches can be applied to simplify some event calculations but in some cases specialised code must be invoked to handle event calculations.

For example various solutions exist whereby the multiplicity of users to be notified can be minimised and the field of influence of any particular game play event can be minimised, which dramatically reduces the scale of concurrent data transactions required. For example in the instance of a map - based game, it is known to divide the map into sectors or segments and to allocate a sector to each server in a game. The server then only handles that proportion of game events which take place in its sector and only notifies those players present in its sector. However it is not always possible to draw divisions such that servers can work truly independently. If a game event occurs at a sector interface, or if a player is positioned at an interface, the servers can no longer be independent. In this instance, either the server boundaries must be shifted or the two servers must be synchronised to process in parallel and to talk to each other to make sure that one server has not got ahead of another. This causes a chain reaction and server failure (or failover), servers lose messages as the time taken to send is too great, the server tries to send more messages to make up for the lost messages and this compounds the loss, resulting in the server being overloaded and crashing. A poor solution to this is to place obstacles on boundaries preventing players operating in these areas, and this reduces the visual effect and the real scale of the game. Also it is possible to prioritise interacting clients / object data and transmit such data to a client based on priority, for example as disclosed in WO 02/098526 (Playnet) which relates to sharing and transferring data between servers, in a distributed gaming system. In this system if each server has a capacity for 1000 clients, and has all the information relating to 500 players and only 10% of the information relating to another 5000 clients, and having shared access on some of that information, it has increased the number of clients that can connect to the system. However this system is still limited in the number of clients that may connect and also has performance limitations.

Another solution to support an internet game for more than one thousand or several thousand players is to provide a system comprising more than one server each having capacity of up to 1000 players. A system designed to support over 1000 players simultaneously per server is the Everquest system. However in an effort to simplify the problem of massive concurrent play this system in fact supports a number of games run in parallel, each on an individual server and is not a truly massively multiplayer game. This imposes a serious limitation on the consequences for gameplay.

The literature discloses a further variation in which using a server cluster the computational load associated with the hosting of the game and the network traffic: generated in the course of playing the game may be distributed over a number of individual servers. WO 00/77630 (BT) discloses an object oriented approach to multiplayer games allowing distributed objects to communicate with each other and to move whilst still communicating. However this is an inflexible and cumbersome system, and merely addresses moving objects from one server to another as they move around in a game, for example moving a pistol that changes hands throughout play and so has to be moved from a first client up to the server and down to the second client. The publication fails to disclose a method for increasing the number of users or clients who can access a game without increased latency, message errors and ultimately server failover. In this publication an object is a relatively inflexible element being made up of source code and permanently associated data. It is an inactive element.

There is at present no universal solution to these problems, there are several solutions, most of which work for some of the time but none working for all of the time in all cases.

Although hardware upgrades are constantly available which increase capacity, currently available upgrades are not capable of providing the capacity increase which would be required to support a game with a million players, and effective upgrades will not be available for many decades.

WO 00/33536 discloses a network management system comprising a network monitor arranged to monitor a load on elements of a computer network and to reconfigure the network to optimise performance. This document forms the pre-characterising portion of the claims appended hereto.

We have now surprisingly found that a MMO game may be provided for up to a million or more players using a distributed operating architecture and system in which services are distributed over a user/server system to interact with and communicate with each other and enable dynamic realtime distributed communications. More particularly the invention provides a system which is able to support a single massively multi player on-line (MMO) game for up to a million players and which is not simply made up of hundreds of games running in parallel.

In a further advantage the invention provides an adaptable and flexible system to support an MMO game which can be modified and tuned to support all game types in most efficient manner, enhancing accuracy of play and reducing latency. In a further advantage the invention provides a system to support an MMO game which allows games to be played without loss of game messages.

In a further advantage the invention provides a system to support an MMO game which provides a high level of security and is resistant to hacking or cheating.

More particularly the architecture operates in real time and with certainty of game play for all users by providing a modular support system for an event driven application comprising a processor farm or server farm which is to be accessible to a plurality of different users at the same time for example via a network registration having a log-on address, in which a plurality of processors (application servers) are arranged in modules and in which events to be calculated are classified into modular groups of events, each processor performing an assigned event and one processor, or groups of processors (modules or clusters) operating in dynamic collaboration, performing a modular group of events wherein the farm includes one or more load balancing processors which determine the allocation of events at any given time, deal with individual requests of processors for access to information, and direct transfer of services, ie software required for calculating events, and optionally additionally data or to ensure that each processor is load balanced and is performing its calculations in most efficient manner. In this system an event is a service as hereinbefore defined.

There is therefore provided according to the present invention a system architecture for a multi user application requiring massive concurrent data transactions comprising in a modular networked system of servers and of network services: a plurality of application servers providing execution of services based on data from multiple users, a service comprising one or more processing tasks applicable to data not tied to the service; one or more load balancing servers; a network connection connecting application and load-balancing servers; characterised by: one or more load balancing expert systems having access to a register of application server responsibility and a register of users, operable to monitor application server load and a division of services on individual application servers and to direct a transfer of services between servers in order to: (i) facilitate and simplify calculations requiring data access and/or transfers; and (ii) to distribute application server load to meet capacity of any given application server; wherein the load balancing expert system is operable to direct a transfer of services between servers by either cloning, on a second server, a service operating on a first server and stopping the cloned service operating on the first server, or activating a service preloaded on a second server and stopping the corresponding service operating on a first server.

A service as hereinbefore defined may comprise a piece of code with no permanently associated data, but in any event is capable of processing tasks applicable to data not permanently associated therewith or associated elsewhere. A service may also be defined as the sequence of states of an executing program.

Preferably the load balancing expert system does not direct physical transmission of services as such but either clones the original and initiates the operation of the clone, at the same time stopping the original and subsequently deleting the original; or services are preloaded on all servers before the start of an application, and the load balancing server directs the activation of a service on a new server, stopping the same service which was previously in operation on another server. Services created during an application may be either uploaded or cloned. In fact it is not possible to do this with other systems such as distributed object systems since there is a fundamental law that objects cannot exist in two places. In BT above, an object is defined as a game component which is a self contained grouping of data and code that represents some aspect of game implementation.

Preferably the architecture of the invention provides a linear communication chain from user or server, reducing the load on servers. Linear communication is provides a linear communication chain from user to server, reducing the load on servers. Thereby linear communication is provided by services or expert systems operable for parallel linear algorithms.

An expert system as hereinbefore defined typically operates a number of services, whereby it may be defined as a high order service. An expert system is capable of accepting requests and generating reports in answer.

A service may be of several types, for example may relate to application logic, supporting application features and the like. As hereinbefore defined an event task may be defined as a service. Reference herein to an event or an event task is to a transformation from one set of application circumstances to another. In a particular advantage of the invention an event is created to change application data in an application run by the system architecture. For example in an event task or service which decides who wins a battle between 2 people-the service must give a different answer even with all considerations remaining constant, or there is no suspense as the outcome can be predicted. For example if one player realises that is he takes a step backwards before a fight then he wins, he can then cheat. A service is capable of a complexity of operation, taking in the surrounding or other considerations.

Typically a service includes source code relating to its "state": loading, loaded, starting, running, paused, unpaused, resuming, unloading and reloading (when upgrading) or stopped (when any of the above malfunctions). Suitably a service has an associated process which dictates its state, and activates or deactivates or the like by delivering an appropriate message. Services are useful in a system in which they need to be run almost continuously. Preferably therefore services have the advantage that they direct processing tasks or states of an executing program but do not necessarily operate themselves, and this allows a more dynamic and efficient operation. Services are suitably operable for very generic features, tasks or events, whereby services may be grouped or bunched to be operable for more complex features, tasks or events, from a set of existing services, and this avoids the need to constantly write new services for specific features, tasks or events.

Preferably in the system architecture of the invention the load balancing expert system is operable to distribute and dynamically re-distribute data and/or services among the application servers based on one or more of:
(a) first information presenting a relative desirability of data for a service;
(b) second information representing a relative desirability of a service for an application server; and
(c) third information representing a processing load and / or spare processing capacity of an application server.

The load balancing expert systems may also be operable to monitor division of original data, copies of data being moved by the operating system, in known manner.

The system architecture of the invention provides a Service-balancing system, where not only are the requests balanced amongst servers, but expert systems and services running on the servers are themselves mobile, and move from server to server to accommodate changing usage patterns, whereby memory requirements and computing requirements are minimised, event computation time and reporting are substantially real time and latency is minimised.

This service - balancing system increases both performance and reliability. In one instance, for example, if the data needed to answer a request from a user is spread across three different servers, then a huge overhead is required to gather that data and present a single response to the user. If the data can automatically move itself around, so that related data congregates together and the services congregate with the data's final position, then the overhead disappears. This is clearly faster, but because it is also more reliable - systems usually crash when they become overloaded - this design enables the system to respond to an imminent overload by dynamically re-configuring itself in the most appropriate manner, faster than any human could spot the problem and attempt to manually reconfigure it.

Preferably in the system architecture of the invention pluralities of the application servers are associated together as modules, each module being reconfigured to provide higher priority and/or speed intra-module communication than inter-module communication. Preferably an expert system is configured to use
(i) services within a single module; and/or
(ii) data located within a single module.

The present invention therefore provides a modular system providing artificial intelligence in a number of different expert systems each of which perform very simple calculations but in very large numbers and at very high speed, and additionally which interact to provide a complete application. A module may be characterised by intramodule communication and/or inter-module communication. Intramodule communication may be more efficient than inter-module communication.

The configuration of a module may be defined by hardware and/or software. Servers or modules may be characterised or grouped by a protocol which they are running on, for example, if a server is providing webpages, it may be grouped by webprotocol, if sending sms messages, it may be grouped by sms protocol etc. Reference herein to a software server is to a software process created for each protocol, which implements the protocol and provides generic access.

A module is preferably a cluster of servers in which interdependent expert systems and services and data are local to the module but may be scattered over different servers. Preferably the load balancing expert system migrates two interdependent event tasks (ie services) or expert systems to the same server. Typically related data congregates together and services congregate with the data's final position, subject to allowable load on server and other heuristics, in order to access the data. Alternatively a service may be moved from one server and split between two servers, in which case the service moves to both servers, and the applicable data in the form of different users, may be split between the two servers. This may be for example as a result of change in group dynamics in an ongoing application.

Preferably the load balancing expert system operates on a single server or a cluster of servers. A load balancing server cluster may be termed a load balancing module.

As hereinbefore defined, expert systems are essentially pieces of code which accept requests and generate reports in answer. The expert systems of the invention have been developed in which complex reasoning calculations are performed on large numbers of "facts", for example for calculating the location of a user or his line of sight or sound at any one time. These reasoning operations may involve the performance of complicated mathematical calculations on the "facts" which the expert system is to respond to, in order to provide the required location or event message output for information or control purposes. Preferably calculations are classified by event whereby each expert system performs one type of event driven calculation and thereby becomes faster and more proficient with uninterrupted repetition of this calculation.

Expert systems relate to both application logic and supporting features type services, as defined above. The load balancing expert system is an example of a supporting features type services. Other examples follow hereinbelow.

The system may additionally comprise one or more user ambassador expert systems providing a confidential user interface, operable to transmit user requests and communicate results to individual users or user groups and operate on individual network protocols for each individual user. Preferably the network connection for connecting users is from the user to the user ambassador and is not accessible to any other part of the system, and the network connection for transmitting event instructions to the system and receiving reports is from the user ambassador expert system to the servers or server clusters, hereinafter termed modules, making up the system of user servers, hereinafter the server farm.

The system may additionally comprise one or more service expert systems operable to perform calculations relating to an event. Each service expert system typically comprises a plurality of services.

The system may additionally comprise one or more user solution definition or solution selection expert systems operable to apply at least one solution or selecting at least one solution.

The system may additionally comprise one or more event expert systems operable to calculate events to determine users affected by each event and subsequently compute the effect thereon, forward an event message to each user ambassador of affected users and implement the event.

Reference herein to an application, which may equally be termed an operation, is to an application wherein a user operating a terminal joins an operation on a processor or server, such as a board game, gambling game, locating game or application, training game or system, teaching system, dating match application, introduction service application, sport management game, such as football or horse racing management, shooting game, battle game virtual reality game etc.

Reference herein to a "terminal" is to a device or "platform" connected to a network and accessible to servers, such as a personal computer, console such as Playstation™, hand held device, mobile phone and the like.

Reference herein to a server is to an individual server and future modifications thereof including servers linked to operate as a virtual unitary server, with data migration in to all the component servers. Preferably servers include modular layers or levels hosting various systems and services as hereinbefore defined, levels being distinguished by networking, access, competency level, RAM access etc.

The load balancing expert system may migrate two interdependent event tasks (ie services) or expert systems to the same server. For example in a map based application one server SA is competent for a quarter of the map and another server SB has access to data about people on the map. Traditionally the server SA would request access to data on SB. In the system of the present invention SA asks for data migration and inter server "chatter" is therefore minimised, efficiency increased and latency further reduced. The server farm of the invention therefore operates as a virtual single server or cluster of virtual single servers, or modules as hereinbefore defined.

Preferably each module has a limited independence whereby it is interdependent with other modules, and groups of modules may be completely independent. This provides additional advantages in terms of dynamic join/leave semantics, allowing servers to be uploaded and hotswapped for upgrading, modifying and live updates, and also allows any module or a set of modules that perform particular tasks to be replaced with little effort.

Although it has been known in the past to group servers so that overload of one server spills onto the next server in the group, a modular approach congregating interdependent services (tasks) and non-associated data has not been used as such.

Preferably the load balancing expert system(s) coordinate and distribute events (ie services) and event calculations between application servers and provide general resource management.

The modular system of the invention which operates on services and unassociated data enables provision of a user interface (API) split into thousands of modules as opposed to the tens of modules known in the art.

The techniques of load balancing and server failover are known techniques which have been used in other applications in the past. Webservers use a dedicated computer which decides which server is to carry out a task and allocates the task, in response to a task request specifying certain needs. The task allocation "layer" decides which server on the entire network is most suited to performing the task and returns the result with the appearance that the task has been performed by the layer itself. The user only has to memorise one web site, for instance, and load-balancing at the company site automatically shares requests to that address amongst many servers. For instance, Google supports millions of requests per day, far more than any single computer could manage: the Google website is in fact many hundreds of servers pretending to be one.

Although load balancing is not known as such in MMO it is known in MMO support systems or engines to distribute a game across different servers and to calculate each game sector on the server responsible for that sector. An amount of server - server communication is required if an event in one server sector impinges on an adjacent sector, for example if an event occurs at a server boundary. In this case typically one server requests access to data relating to the adjacent server boundary in order to calculate the event message. However each server works more or less independently. In the case of server overload a new server is introduced to allow the overloaded server to spill over onto the new server.

Instances of true server - server interaction have neither been considered for use in MMO systems nor been able to be incorporated since the MMO systems to date are not truly modular and therefore the task allocation required for functioning server failover and load balancing has not been possible.

The present invention extends the concept of load balancing as known in the art, since the known concept could not meet the massive concurrent data demands envisaged in the present invention. In the present invention the load balancing server directs not only task (ie service) allocation but directs transfer of high order services (expert systems) and other software to change server competency for a more efficient application with lower latency. It may also direct original data transfer.

The system of the invention therefore comprises a distributed operating layer, and a services layer, in which large and small modules or subsystems are composed of interchangeable services. This allows hotswopping or pre-swopping within or to the services layer, adding new services during an application, or prior to an application, for example in the case of a system host customising the application. In the prior art methods, for example WO 00/77630 as hereinbefore referred, a system is disclosed which enables maintained communication with moving objects. The present system architecture effectively moves as if parts of servers themselves are moving around, in the form of subsystems within a module or a server, and therefore it is simple to divert messages.

The load balancing expert system of the invention is very simple and therefore universally applicable. A server may have one or more services running on it that question servers on their preferences and load, and question services on their preferences, a plurality of services needing to communicate, therefore comprising a plurality of load balancing expert systems. Alternatively a single load balancing service may be provided that queries all services and gets a summary of interrogation results.

In the system of the invention application servers or software servers comprise an identifier or tag and application servers or software servers are aware of their own identity, and also comprise a list of all responsibilities in terms of responsibility for the entire application map or a subset, cell or grid thereof, which is comprised in a register of server responsibilities and is accessible to the load balancing expert system. The load balancing expert system receives an overload alert from an application server or its corresponding software server, or presents to each application server or software server a set of questions on relative desirability of any items in a list of event tasks (ie services) to be allocated and each server or software server grades these for example from -1.0 to +1.0, and modifies this grading with time; and also presents to each service a set of questions on the relative desirability of a particular server as host, whereby services grade these on the basis of need for the data present on servers; and also receives an overload alert from or questions every server or software server on its throughput and latency, receives replies and decides whether there is a need to reduce the load on any given server, looking at the list of responsibilities and using heuristics such as RAM and available CPU to sort by undesirability, selects one and offers it to a server or software server reporting high desirability or to a server or software server which is least heavily loaded.

The present invention provides for integrated server clustering and handover by means of the one or more load balancing servers being apprised of individual server load and module server load at any one time and being competent to direct communication between servers, including the transfer of expert systems and task responsibilities or services where these become more appropriate to another server or can be more efficiently operated from another server. The load balancing expert system may also be competent to direct not only communication of data but the transfer of data where this will speed up the interaction between server and data or where the need for data by the host server is less than that of the requesting server.

Preferably the load balancing expert system compiles server clusters or modules so that all expert system and data needs are local to a module and services needing the same data are local to a module, or modules are balanced in terms of RAM overload, CPU overload and other metrics. For example in the event that two solutions apply for calculating an event, these are dealt with in separate parallel algorithms, thereby maintaining linearity of communication. Parallel linear-algorithm expert systems are operated in a module cluster whereby they are able to access common information and data and are therefore always operating on the same dataset, in the event of a change in application circumstances. In a particular advantage of the invention data is minimally duplicated throughout the system, and ideally not duplicated at all. This avoids inconsistencies, conflicts and application errors. The load balancing expert system of the invention allows modules or systems operating parallel algorithms and requiring access to the same datasets to be assigned to the same server or server module whereby they are able to directly access the data without the need to make copies, and without the need for time and capacity consuming data requests or transfers requests. In a particular advantage the use of expert systems operating parallel algorithms ensures that the application is readily scalable without system overload.

In a further advantage of the invention the modular approach allows a scalar allocation of competency. In any event calculation a server CPU communicates with the hard drive, RAM and Cache 1 (very fast RAM) and Cache 2, as well as floppy disc and a networked server or terminal. Code is written so that each expert system performs one task over and over without deviation. By a scalar allocation one server has competency for locating an event to a global accuracy and hands over to the next server which has a competency for locating to a regional accuracy, which in turn hands over to a server which is competent to local or pixel perfect accuracy. This last server can access the Cache 1 memory to locate an event as it requires the minimum in data. By a scalar task allocation of this type all tasks are addressed in terms of their needs in terms of memory, data access etc and are then allocated to a server providing the required competency, thereby avoiding wastage of memory or data access time.

Preferably each expert system in the system of the invention is developed around a key algorithm which is substantially linear having regard to the relation to events and users. Hence an event may be related in a linear algorithm to a finite group of users and event messages may be reported to the same or a different finite group. This differs from a power algorithm or multiple dependent algorithm in which an event generates a query amongst all users to determine the effect on each and in turn the messages are reported to all users, which is the case in a truly multi interactive system. For example in the case of a power algorithm, for a small number of users the multiplicity of 10 events communicating to 10 users is 100 communications. In the case of a million users each generating events this quickly becomes 1M events and 1M users which equals 1 x 10 ¹² communications. In the case of a linear algorithm, this could be reduced to 1M events each being communicated to different sets of 10 - 200 users, giving a total of 10M to 200M communications with exactly the same visible effect to the users as in the power algorithm system of the prior art, indeed giving a superior visible effect in terms of accuracy and reduced latency.

Some linear algorithms suited for use in the system of the invention are known and some are novel. Indeed it is known to apply one algorithm type, line of sight, in an internet game. It is also known to apply another algorithm type, quadrant method in an internet game. However in a further embodiment the present invention provides dynamic algorithm selection in an internet game, whereby an algorithm suited to the prevailing dynamics of the application is selected and applied, for a suitable period until such time that the application dynamics become unsuited to that algorithm and an alternative algorithm is selected.

A solution selection expert system as hereinbefore defined comprises a linear algorithm which performs an initial solution selection which determines the nature of an event and assesses the state of the application in play, makes a set of assumptions in order to assess the means by which users will be affected and selects a solution to limit the impact of the event to a reasonable number of users, whereby non affected users are not considered in the calculation of event message. Preferably assumptions are selected from a number of predetermined assumptions, such as shadow, line of sight, locality, terrain etc. This means that update information which relate to an event need only be applied to an application subset in most cases and need not be applied to the entire application set, ie the entire application "world". This solution selection algorithm preferably operates on a binary selection applied to the entire application, certain users or a subset, and eliminating invalid solutions, for example if a large explosion takes place it is not possible to limit by range, if an audible event takes place it is not possible to limit sound by line of sight etc. The system may for example operate 100 shadow expert systems and 2 line of sight expert systems at a given time, and the load balancing server present in the system can specify that an event message be delivered to a solution of either type or even to a specific solution expert system or server competent for that particular solution expert system if the data access needs are known.

Preferably the load balancing expert system of the invention comprises data relating to the entire application and to subsets thereof and monitors the prevailing solution efficiency. On detecting a decrease in efficiency it automatically selects and directs a change in solution for any given server and any given service on any given server at any given time whereby one solution is replaced by the directed solution.

Preferably linear algorithms which may be selected for dynamic solution selection in an application according to the present invention include line of sight, shadow, quadrant, scalar, range, grid, etc and additionally include any solution which is selective to a dataset which is identified in and recorded in the system architecture.

The modular system of the invention provides each user or group of users with an ambassador that is able to coordinate event messages from multiple events, coordinate related event messages from one event, such as sight and sound messages, and combine the modular event messages as a complete event message. In a particular advantage of the invention the event message is reported to each directly or indirectly affected user ambassador to validate the message, and authorise its implementation, and report to the user.

Preferably ambassador expert systems comprise a network protocol relating to effective communication with the user (or group of users) terminals, giving precise terminal design and constraints, specifying all things that the terminal can do and how to communicate (such as which protocol language is accepted, how must a message be formatted etc), whereby the ambassador need only question the user on effective presentation protocols such as whether the user terminal has a screen , a big screen, speakers, can it transmit sound etc.

Preferably the system architecture provides a dedicated ambassador expert system for each user or groups of users and for each access terminal or platform for each user, for example for a user connecting from a pc or Playstation™ and also from a mobile phone. The ambassador is therefore able to base its assessment of users game play and reporting on its protocol knowledge. An ambassador expert system for a group of users may be for a group of 1 to 100 users having having a common requirement for a particular type of event message, for example a group working as a party may have common vision constraints or the like. Preferably the protocol gives precise terminal design and constraints, specifying all things that the terminal can do and how to communicate. Accordingly the invention provides a multi-platform network support system for applications such as on-line games (MPNGs) and the like as hereinbefore defined.

In a further advantage the user ambassador expert systems are intelligent, whereby they are associated with and are able to access memory banks and datasets relating to the user in question and assess whether an event message is feasible having regard to the user and his competence. By this means invalid messages may be detected and queried. This has the result that accidental or fraudulent relay of incorrect information to a user may be prevented ensuring the accuracy and quality of the application, and ensuring that no information leakage can take place which could present an opportunity for an application cheat, either by hacking to modify a users limitations for example, such as personal vision limitations, or by running two users on adjacent machines to increase his field of view etc.

In a further advantage the user ambassador expert system provides for user-user communication directly or via intervening respective ambassadors. Direct communication may be in the form of chat rooms, auctions etc.

In a further advantage the modular system of the invention in combination with the ambassador expert system provides for independent reporting to users. Independent reporting is preferably enabled by individual servers or modules completing event reports independently and not being held up by others. This has the advantage that servers do not have to wait for each other and that reporting and implementing event messages is not held up in the case that event calculation for one or more users is borderline and thereby protracted. This has the additional advantage that in the case of server overload or high server latency the server can drop borderline calculations reducing load and thereby maintain efficiency and reduce latency on direct event message reports. Traditionally in order to prevent conflict servers cannot access data at the same time but need to share access in sequence, and to provide a guarantee of message delivery servers are not able to report at the same time. The present invention characterised by a user ambassador service on dedicated servers enables both simultaneous reporting and provides an alternative mechanism for delivery guarantee. The ambassador expert system is operable on a priority ranking of events and users, whereby the ambassador provides a final judgement on event message in borderline cases. The present invention moreover provides faster and more efficient event calculation which reduces conflicts as all servers complete tasks in less time.

Additionally the ambassador expert system may comprise a complete local dataset record of the entire application as acknowledged received by the user, whereby any unsent messages can be detected, as a discrepancy with the application status at any time, whereby the ambassador simply sends the next message with the omitted message to update the user. Traditionally internet systems keep sending a message until an acknowledgement is received which means that message delivery delays get compounded by repeat sends and latency is increased. The system of the invention avoids increases in message sending and thereby avoids increase in latency.

In a further advantage of the invention the modular system provides expert systems for dataset generation using spare system capacity at any time, generating iterative dataset calculations relating to the prevailing application which may be applied to solution calculations further enhancing linearity. The load balancing expert system questions servers on unused capacity and authorises dataset calculation whereby it is able to direct access to those datasets in subsequent requests for information to support event calculations. For example spare server capacity may be used to generate information and derivative maps for a map-style application, which represent the application in terms of shadows, and lines of sight visible from multiple co-ordinates, whereby shadow or line of sight event messages of an event taking place at any one such co-ordinate is instantly directly calculated using such dataset, without needing to first calculate the shadow or line of sight subset.

Preferably the system comprises modular datasets representing the application whereby it is possible to update the application in respect of selected data only without the need to update an entire application dataset. For example a game board may be represented by layers of information maps presenting sentient, non-sentient objects subclassified by permanence, for example as a dataset to the geological formations, dataset of vegetation, dataset to buildings, dataset to roads, tracks etc, dataset to human activity or animal activity, dataset to magic power zones, dataset to psychic events, dataset to objects impermeant to psychic events, such as lead objects etc. Additionally derivative datatsets or maps may provide data on paths between sentient objects such as buildings, furniture in a room etc, without the need to show the intervening buildings and furniture, may show height datasets or maps, gradient datasets or maps etc.

Traditionally games have a real map and a selection of derivative maps showing certain features. Preferably the system of the present invention provides datasets relating to derivative maps only whereby update information does not need to be duplicated to a real map and whereby algorithms relating to the application can recognise all derivative maps universally by coordinate. Thereby they do not need extra code to recognise a real map or vice versa.

Preferably the system also incorporates a neural network for pattern recognition in information and derivative maps.

In a particular advantage the modular datasets of the invention including derivative maps provide a greater number and variety and intricacy of available solution selection methods to determine event message. Datasets may be presented as code, algorithm, coordinate, 2D, 3D, derivative etc. Datasets may be modified by the application provider or by users, with different security levels for modification access.

The system of the invention may be operated with any necessary number of servers and processors depending on the desired scaling and modularity, for example may operate with from 1 to 100 load balancing servers and from 5 to 50,000 application servers. In a particular advantage of the invention, additional servers of any type may be introduced, or indeed replaced, removed or disabled, at any time prior to or during an application, as a result of the modularity of the architecture. This enables seamless evolution to a larger, smaller or customised application. The system architecture of the invention is therefore suitable for up to 1,000,000 users, for example from 10,000 to 1,000,000, more preferably from 10,000 to 500,000 or 500,000 to 1,000,000 users.

The system may also be operated on any desired network bandwidth. It is an advantage that the modular system of the invention enables low bandwidth usage per user which helps to reduce costs and increase user capacity.

The architecture of the invention may comprise additional features such as a network address for user registration / log-on from user terminals; a network connection for connecting to user terminals and allowing event instructions to be transmitted to the system and event messages to be returned to the users; a plurality of file structures / datasets relating to the application and events; a plurality of memories for storing data relating to the application and events a plurality of file structures / datasets relating to a register of servers and a register of users; a plurality of memories for storing data relating to a register of servers and a register of users.

In a further aspect of the invention there is provided a method for hosting or using a massively multi-user application as hereinbefore defined comprising providing a system architecture as defined, comprising a plurality or application servers, and a load balancing expert system as defined, adapted to a generic application, or customised to a particular application. Features of the method correspond to the features of the architecture as hereinbefore defined.

In a further aspect of the invention there is provided a user terminal for networking to a massively multi-user application system architecture as hereinbefore defined. Features of the user terminal correspond to the features of the architecture as hereinbefore defined.

In a further aspect of the invention there is provided a user interface for interfacing to a massively multi-user application system architecture as hereinbefore defined. Features of the user interface correspond to the features of the architecture as hereinbefore defined.

In a further aspect of the invention there is provided a datafile for a massively multi-user application system architecture as hereinbefore defined selected from an event log, user data information, information map, derivative map and the like. Features of the datafile correspond to the features of the architecture as hereinbefore defined.

In a further aspect of the invention there is provided a datalog for classification of events by all features, given as snapshot or historical record. This may be used for any suitable purpose. One such use may be for corruption security etc. Features of the datalog correspond to the features of the architecture as hereinbefore defined.

In a further aspect of the invention there is provided a dataset of rules by which the system determines precedence of conflicting event messages for a user, for example whether a user has evaded starvation by some means etc. Rule datasets may be changed with universal effect as desired. Features of the dataset correspond to the features of the architecture as hereinbefore defined.

In a further aspect of the invention there is provided a machine readable medium comprising system architecture software for a massively multi-user application as hereinbefore defined.

In a further aspect of the invention there is provided a method for controlling and directing the development of an application to be supported by the system of the invention, with the use of the system of the invention as a development means. The arduous processes of tweaking game content to provide even, well-balanced gameplay can take many months - in some cases, years. Each new rule has to be tried out in conjunction with all the others, and tested to see if it e.g. makes a certain weapon too powerful. Currently, this process can only be done by trial and error.

Because the number of possible scenarios (i.e. the combinations of all the different pieces of content) is vastly greater than the amount of content, they exhibit "emergent behaviour". I.e. there are many situations where things happen that the designers didn't predict, as a result of the complex combinations of many simple pieces of content.

The system of the invention allows designers to control and direct the emergence of different behaviours directly, automatically checking all possible outcomes of all scenarios if a certain change were made to a certain game rule. This enables the identification of "absolute rules" that may be imposed and cannot be avoided, enabling developers to identify undesirable situations, and with a few lines of code prevent them for ever. For example no matter what new rules may be introduced, any time the emergent behaviour would contravene an absolute-rule, the system overrides it automatically. This provides unprecedented power to developers, enabling them to produce much more complex games with the same resource cost, and also prevents many previously unpredictable bugs and security holes before they sneak into production-code and cause major problems.

In a further aspect of the invention there is provided the use of a known or novel linear algorithm or known power algorithm modified in novel manner to a linear algorithm in the system of the invention as hereinbefore defined.

In a further aspect of the invention there is provided a novel linear algorithm for an expert system as hereinbefore defined, in particular for a solution as hereinbefore defined or hereinbelow illustrated.

In a further aspect of the invention there is provided the use of a known expert system in the system of the invention as hereinbefore defined.

The invention is now illustrated in non-limiting manner with reference to the following figures and examples.

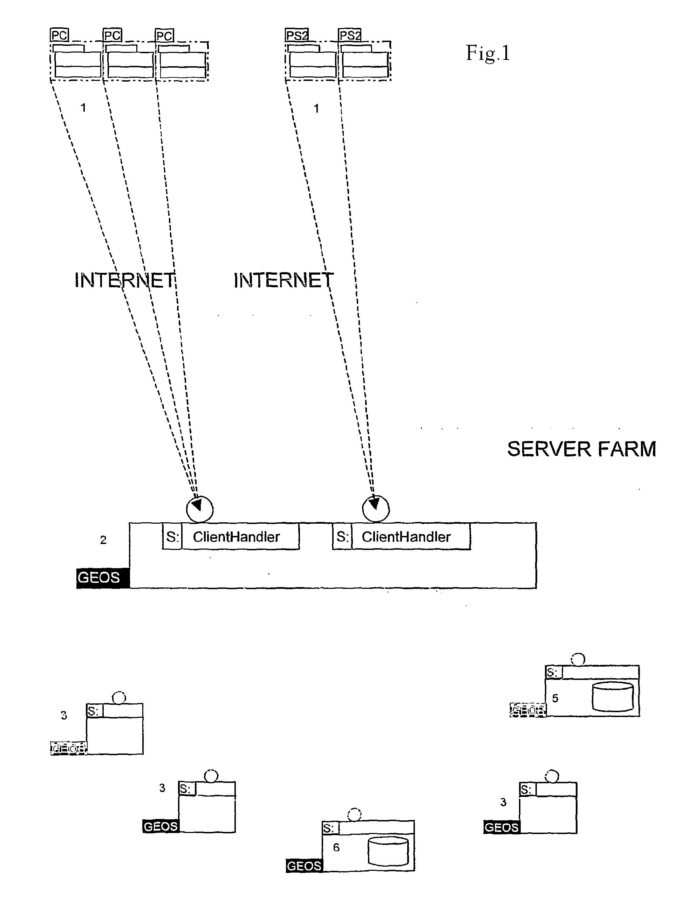

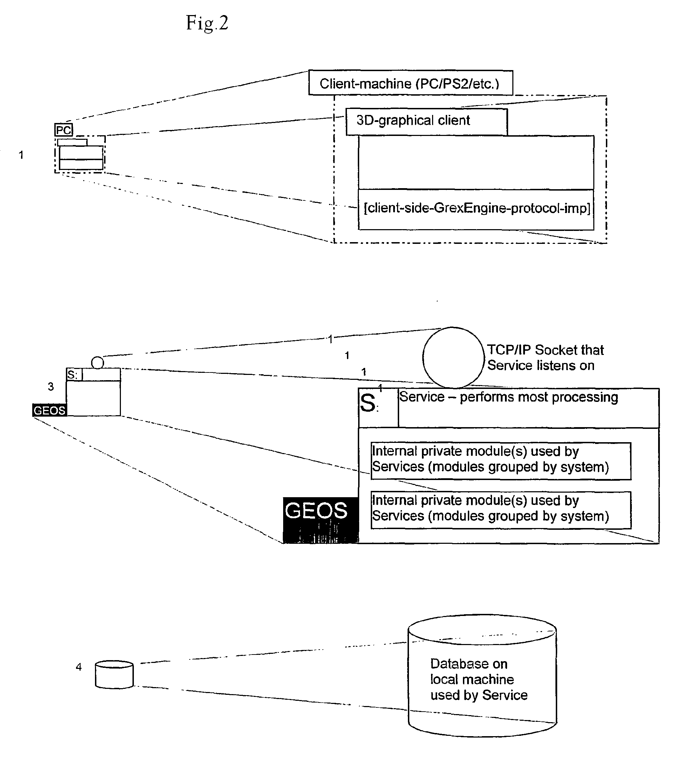

In the figures
Figure 1 illustrates the modular system architecture of the invention with modular expert systems, in the form of a layered distributed architecture. Network connections are shown in the form of internet connections from user pcs (PC, three shown) and playstations (PS2 two shown) - Layer 1. Network connections enter the server farm of the system architecture of the invention via ambassador expert systems (client handlers, two shown) located on a server of the operating system (GEOS, Grex engine operating system, one shown) - Layer 2. From there communication to a number of application servers (two or four communication channels shown, 5 servers shown) enables event requests and reporting and other services to be performed - Layers 3 to 6. Application servers may or may not access databases on a local machine, used by services on application servers, as shown.

Server-server communication takes place directly within the server farm. The load balancing expert system may be located on one or more of the servers, which communicates with all servers, and usually does not communicate with the client handlers (ambassadors).

The user pcs or playstations are shown in detail comprising a client side protocol and a 3D graphical element. The application servers are shown in detail comprising service(s) that perform most processing, as a layer above internal private module(s) used by the services (grouped by system). The servers include a TCP/IP socket that service(s) listens on.

### Example 1 - Server Handover

Server 1 is responsible for a sector of the game map, and Server 2 is responsible for an adjacent sector, Server 1 also hosts Player A's user ambassador and is responsible for calculating all activities relating to Player A. Player A moves into Server 2's sector and Server 1 requests access to information on Server 2's sector. The access request is transmitted to load balancing server X which determines that the activities relating to player A can best be calculated by Server B, and dictates migration of the Player A user ambassador service and related event services to Server B.

### Example 2 - Game map application

Game Scenario : A map game application is run for a period of time with multiple players each operating independently. After a time one player gains popularity and starts to draw a following. This influences the game dynamics such that other groups form and the game dynamics change from individual to group dynamics. The expert solution selection system therefore selects an appropriate solution from the following known and novel solutions and instructs servers to operate the necessary expert system solution in respect of some or all users and in respect of some or all of the game play:

### Linear algorithm solutions

In the above game scenario players are simultaneously creating events selected from seeing, doing, walking, shooting, talking etc.

In the case of a small number of players the multiplicity of 10 events per second communicating to 10 players is 100 communications per second. In the case of a million players each generating events this quickly becomes 1M events per second and 1M players which equals 1 x 10 ¹² communications per second. In the case of a linear algorithm, this could be reduced to 1M events each being communicated to different sets of 10 - 200 players, giving a total of 10M to 200M communications with exactly the same visible effect to the players as in the squared algorithm system of the prior art, indeed giving a superior visible effect in terms of speed and accuracy.

### Example 2a - Solution Selection - line of sight

Line of sight solutions are known in other fields of computing. Line of sight calculations now need to be carried out on more objects, whereby it is necessary to determine whether a group member can see or be seen by any of another group members instead of simply by another player.

### Example 2b - Solution Selection - shadow

As an alternative to line of sight selection, shadow selection, also known in other fields of computing, allows whole quadrants or sectors of a map game to be blocked out, shielded by large objects.

Shadows may encompass an entire group as readily as an individual and hence this solution gains importance for selection.

### Example 2c - Solution Selection - quadrant

Information maps present the world in quarters, then in subquarters of each quarter, repeatedly refining by further subquartering. A server carries a particular set of subquarters, depending on number of servers. However this server continues only to operate on this quarter principle and will not apply a different solution should it become more efficient, for example if all users move to only 3 subquarters and vacate 37 subquarters. In that case one or two servers will carry all users and all event calculations, and will neither migrate quarters nor users.

In the system of the invention is then possible to confine an event or user or an event message to the smallest quarter to which the noticeable radius of that event extends and to only communicate event messages to all sentient objects in that quarter.

A global event would be communicated to the entire "world" whist a regional event having diameter n would be communicated only to users in subquarters containing the diameter n, and a local event having diameter p would be communicated only to users in subquarters containing the diameter p.

If the event or user does not move between subquarters it is not required to update the location data, and possible therefore simply to select the smallest scale quarter in which the event range or user move is contained and operate with that dataset.

Groups may spread over an area, whereby a group may easily fall over a quadrant border, which was less likely to be the case with an individual, this solution becomes less convenient and is deselected.

### Example 2d - Solution Selection - sets and subsets, locating

A known solution is to provide information maps relating to the world in quarters, then for subquarters for each quarter, repeatedly refining by further subquartering. It is then confine an event or player or an event message to the smallest quarter to which the noticeable radius of that event extends. It is then possible to only communicate event messages to all sentient objects in that quarter.

A nuclear bomb would be communicated to the entire "world" whist a small explosion having diameter n would be communicated only to players in subquarters containing the diameter n, and a match strike having diameter p would be communicated only to players in subquarters containing the diameter p.

If the event or player does not move between subquarters it is not required to update the location data, but therefore to simply select the smallest scale quarter in which the event range or player move is contained and operate with that dataset.

In the solution of the invention the server is able to communicate with other servers for other information access, for service migration and other requests, and is also able to communicate with the user ambassador for event message verification for a more accurate and realistic game. Should the allocation of subquarters to servers become inefficient the load balancing server directs migration of subquarters or players.

### Example 2e - Solution Selection - range

A nuclear bomb would be communicated to the entire "world" whist a small explosion having diameter n would be communicated only to players in subquarters containing the diameter n, and a match strike having diameter p would be communicated only to players in subquarters containing the diameter P.

A group may be out of range of an event as may an individual hence this solution gains importance.

### Example 2f- Solution Selection - shields or weapons

A group may equip themselves with distinctive weapons or shields which are superior to or impenetrable to other individuals / groups, hence this solution gains importance

### Example 2g - Solution Selection - grids

Grid solutions are also known in other fields of computing in relation to map scenarios. In this case the grid may be a classical square grid or in novel manner could be a pentagon grid, reducing the number of sectors at an interface. Grids may be superimposed and out of alignment allowing moving to a different level grid to operate away from an interface or boundary.

### Example 3 - scalar event calculation using grids

By a scalar allocation one server has competency for locating an object or user to a 10 metre accuracy and hands over to the next server which has a competency for locating to a 1 metre accuracy, which in turn hands over to a server which is competent to pixel perfect accuracy. This last server can access the Cache 1 memory to locate an individual as it requires the minimum in data.

### Example 4 - dataset generation

Line of sight dataset: a dataset is prepared with spare server capacity calculating lines of sight relative to static objects from numerous coordinates, these are applied when the game reverts to line of sight solution. In order to complete the dataset, a server allocated with that dataset calculation accesses servers holding maps relating to regions through which each line of sight passes. In the course of application a mountain is blown up and line of sight dataset is recalculated accordingly.

### Example 5 - independent reporting:

In a game in which 20 players can see an explosion, a further 10 player have their line of sight obscured by a building and can see the flash from the explosion and a further 5 players are the other side of a wood beyond the building and have their line of sight blocked by trees and may or may not be able to see the flash of the explosion, the calculations to determine event message for each group of players is of differing complexity. The event query is sent to 35 competent servers and 20 return a report of seeing the explosion in an instant, 10 return a report of seeing the flash an instant later and a further 5 are held up determining a complex geometrical calculation regarding their 5 players. A delay in reporting for these players is not unrealistic and depends on how observant an individual is in real life. In this case the ambassador for each player can assist in verifying the event message in the knowledge of data regarding the user in question. In the case that a server is overloaded they can drop their calculation without hindering the other 34 players and with the result to their player that he has seen neither explosion nor flash

### Example 6 - information and derivative maps

Information and derivative maps are known in other fields of computing. In this case the invention uses only derivative maps and no universal map, whereby all information is presented in modular manner allowing easy updating and easy calculation. Moreover each derivative feature which is the subject of a derivative map may be used as a solution selection option for any of the above or other known solutions.

### Example 7 - mobile connection to internet game

A player having both mobile and internet connection requires two ambassadors. An event instruction may be sent via the mobile for example to buy a sword in a given price range, another player may offer a sword for sale via intermediate ambassadors or direct communication and a sale is negotiated and the result reported to the application system. The system updates the game to give one player a sword and the other a pile of gold when the player next logs on.

## Claims

1. A system architecture for a multi user application requiring massive concurrent data transactions comprising in a modular networked system of servers and of network services:
a plurality of application servers providing execution of services based on data from multiple users, a service comprising one or more processing tasks applicable to data not tied to the service;
one or more load balancing servers;
a network connection connecting application and load-balancing servers;
**characterised by**:
one or more load balancing expert systems having access to a register of application server responsibilities and a register of users, operable to monitor application server load and a division of services on individual application servers and to direct a transfer of services between servers in order to: facilitate and simplify calculations requiring data access and/or transfers; and to distribute application server load to meet capacity of any given application server;
wherein the load balancing expert system is operable to direct a transfer of services between servers by either cloning, on a second server, a service operating on a first server and stopping the cloned service operating on the first server, or activating a service preloaded on a second server and stopping the corresponding service operating on a first server.

2. The system architecture as claimed in claim 1 in which the load balancing expert system either clones the original and initiates the operation of the clone, at the same time stopping the original and subsequently deleting the original; or services are preloaded on all servers before the start of an application, and the load balancing server directs the activation of a service on new server, stopping the same service which was previously in operation on another server.

3. The system architecture as claimed in any of claims 1 to 2 which provides a linear communication chain from user to server, reducing the load on servers, wherein linear communication is provided by services operating parallel linear algorithms.

4. The system architecture as claimed in any of claims 1 to 3 wherein the load balancing expert system is operable to distribute and dynamically re-distribute data and/or services among the application servers based on one or more of:
(a) first information presenting a relative desirability of data for a service;
(b) second information representing a relatively desirability of a service for an application server; and
(c) third information representing a processing load and/or spare processing capacity of an application server.

5. The system architecture as claimed in any of claims 1 to 4 also operable to monitor division of original data.

6. The system architecture as claimed in any of claims 1 to 5 where not only are the requests balanced amongst servers, but expert systems and services running on the servers are themselves mobile, and move from server to server to accommodate changing usage patterns, whereby memory requirements and computing requirements are minimised, event computation time and reporting are substantially real time and latency is minimised.

7. The system architecture as claimed in any of claims 1 to 6 wherein pluralities of the application servers are associated together as modules, each module being reconfigured to provide higher priority and/or speed intra-module communication than inter-module communication.

8. The system architecture as claimed in claim 7 wherein an expert system is configured to use:
(i) services within a single module; and/or
(ii) data located within a single module.

9. The system architecture as claimed in any of claims 1 to 8 in which the load balancing expert system migrates two interdependent event tasks (ie services) or expert systems to the same server; or related data congregates together and services congregate with the data's final position, subject to allowable load on server and other heuristics, in order to access the data; or a service is moved from one server and split between two servers, in which case the service moves to both servers, and the applicable data in the form of different users, may be split between the two servers.

10. The system architecture as claimed in any of claims 1 to 9 in which the load balancing expert system operates on a single server or a cluster of servers.

11. The system architecture as claimed in any preceding claim, which additionally comprises one or more user solution definition or solution selection expert systems operable to apply at least one solution or select at least one solution.

12. The system architecture as claimed in any preceding claim, in which a server comprises one or more services running on it that question servers on preferences and load, and question services on preferences, a plurality of services needing to communicate, therefore comprising a plurality of load balancing expert systems; alternatively a single load balancing service is provided that queries all services and gets a summary of interrogation results.

13. The system architecture as claimed in any preceding claim, in which the load balancing expert system is arranged to present to each application server or software server a set of questions on relative desirability of any items in a list of event tasks or services to be allocated and each server or software server is arranged to grade these, and modify this grading with time; and also to present to each service a set of questions on the relative desirability of a particular server as host, whereby services are arranged to grade these on the basis of need for the data present on servers; and also to question every server or software server on its throughput and latency, receive replies and to decide whether there is a need to reduce the load on any given server, looking at the list of responsbilities and using heuristics such as RAM and available CPU to sort by undesirability, to select one and offer it to a server or software server reporting high desirability or to a server or software server which is least heavily loaded.

14. The system architecture as claimed in any preceding claim, which provides for integrated server clustering and handover by means of the one or more load balancing servers being apprised of individual and module server load at any one time and being competent to direct communication between servers, including not only communication of data but the transfer of data where this will speed up the interaction between server and data or where the need for data by the host server is less than that of the requesting server, and also the transfer of expert systems and task responsibilities or services where these become more appropriate to another server or can be more efficiently operated from another server.

15. The system architecture as claimed in any preceding claim, in which the load balancing expert system compiles server clusters or modules so that all expert system and data needs are local to a module and services needing the same data are local to a module, or modules are balanced in terms of RAM overload, CPU overload and other metrics.

16. The system architecture as claimed in any preceding, in which in the event that two solutions apply for calculating an event, these are dealt with in separate parallel algorithms, thereby maintaining linearity of communication.

17. The system architecture as claimed in any of claims 3 to 16, in which expert systems operating parallel linear-algorithms are operated in a module cluster whereby they are able to access common information and data and are therefore always operating on the same dataset, in the event of a change in application circumstances.

18. The system architecture as claimed in any preceding claim, in which the load balancing expert system is arranged to allow modules or systems operating parallel algorithms and requiring access to the same datasets to be assigned to the same server or server module whereby they are able to directly access the data without the need to make copies, and without the need for time and capacity consuming data requests or transfers requests.

19. The system architecture as claimed in any preceding claim in which the load balancing expert system of the invention comprises data relating to the entire application and to subsets thereof and monitors the prevailing solution efficiency; and on detecting a decrease in efficiency it automatically selects and directs a change in solution for any given server and any given service on any given server at any given time whereby one solution is replaced by the directed solution.

## Patentansprüche

1. Systemarchitektur für eine Mehrbenutzeranwendung, die umfassende gleichzeitige Datentransaktionen voraussetzt, wobei die Architektur in einem modularen vernetzten System von Servern und Netzwerkdiensten folgendes umfasst:
eine Mehrzahl von Anwendungsservern, welche die Ausführung von Diensten auf der Basis der Daten von mehreren Benutzern bereitstellen, wobei ein Dienst eine oder mehrere Verarbeitungsaufgaben umfasst, die auf nicht mit dem Dienst verbundene Daten anwendbar sind;
einen oder eine Mehrzahl von Lastausgleichsservern;
eine Netzwerkverbindung, welche die Anwendung und die Lastausgleichsserver miteinander verbindet;
**gekennzeichnet durch**:
ein oder mehrere Lastausgleichsexpertensysteme, die Zugriff auf ein Register der Anwendungsserverzuständigkeiten und ein Register von Benutzern haben, wobei die Systeme so funktionsfähig sind, dass sie die Anwendungsserverlast überwachen und eine Aufteilung der Dienste an einzelnen Anwendungsservern, und um eine Übertragung von Diensten zwischen den Servern anzuweisen, um: Berechnungen, die einen Zugriff auf Daten und/oder Datenübertragungen erfordern, zu erleichtern; und um die Anwendungsserverlast so zu verteilen, dass die Kapazität jedes speziellen Anwendungsservers erfüllt wird;
wobei das Lastausgleichsexpertensystem so funktionsfähig ist, dass es eine Übertragung von Diensten zwischen Servern entweder **dadurch** anweisen kann, dass es auf einem zweiten Server einen Dienst klont, der auf einem ersten Server läuft und den geklonten Dienst anhält, der auf dem ersten Server läuft, oder dass es einen Dienst aktiviert, der vorher auf einen zweiten Server geladen worden ist und es den entsprechenden auf einem ersten Server laufenden Dienst unterbricht.

2. Systemarchitektur nach Anspruch 1, wobei das Lastausgleichsexpertensystem entweder das Original klont und den Betrieb des Klons einleitet, wobei gleichzeitig das Original angehalten und in der Folge das Original gelöscht wird; oder die Dienste auf alle Server vor dem Start einer Anwendung vorgeladen werden, und wobei der Lastausgleichsserver die Aktivierung eines Dienstes auf einem neuen Server anweist, wobei der gleiche Dienst angehalten wird, der vorher auf einem anderen Server in Betrieb gewesen ist.

3. Systemarchitektur nach einem der Ansprüche 1 oder 2, wobei diese eine lineare Kommunikationskette vom Benutzer zum Server bereitstellt, wobei die Last an Servern reduziert wird, wobei die lineare Kommunikation bereitgestellt wird durch Dienste, die parallele lineare Algorithmen abarbeiten.

4. Systemarchitektur nach einem der Ansprüche 1 bis 3, wobei das Lastausgleichsexpertensystem so funktionsfähig ist, dass es Daten und/oder Dienste verteilt und dynamisch neu verteilt unter den Anwendungsservern, und zwar auf der Basis einer oder mehrerer der folgenden Bedingungen:
(a) ersten Informationen, die eine relative Erwünschtheit von Daten für einen Dienst darstellen;
(b) zweiten Informationen, die eine relative Erwünschtheit eines Dienstes für einen Anwendungsserver darstellen; und
(c) dritten Informationen, die eine Verarbeitungslast und/oder Reserveverarbeitungskapazität eines Anwendungsservers darstellen.

5. Systemarchitektur nach einem der Ansprüche 1 bis 4, wobei das System auch so funktionsfähig ist, dass es die Aufteilung ursprünglicher Daten überwacht.

6. Systemarchitektur nach einem der Ansprüche 1 bis 5, wobei nicht nur eine Verteilung der Anfragen auf die Server erfolgt, sondern auch die Expertensysteme und die auf den Servern laufenden Dienste selbst mobil sind und sich von Server zu Server bewegen, um die Veränderung von Nutzungsmustern berücksichtigt werden, wodurch die Speicheranforderungen und Rechenanforderungen minimiert werden, wobei die Ereignisberechnungszeit und die Meldung im Wesentlichen in Echtzeit erfolgen und die Latenz minimiert wird.

7. Systemarchitektur nach einem der Ansprüche 1 bis 6, wobei eine Mehrzahl von Anwendungsservern gemeinsam als Module zugeordnet werden, wobei jedes Modul neu konfiguriert wird, um eine intramodule Kommunikation mit höherer Priorität und/oder Geschwindigkeit als bei einer intermodulen Kommunikation bereitzustellen.

8. Systemarchitektur nach Anspruch 7, wobei ein Expertensystem konfiguriert ist zur Nutzung von:
(i) Diensten innerhalb eines einzigen Moduls; und/oder
(ii) Daten, die sich in einem einzelnen Modul befinden.

9. Systemarchitektur nach einem der Ansprüche 1 bis 8, wobei das Lastausgleichsexpertensystem zwei voneinander abhängige Ereignisaufgaben (d.h. Dienste) oder Expertensysteme zu dem gleichen Server migriert; oder wobei verwandte Daten zusammengeführt werden, und wobei Dienste mit der Endposition von Daten zusammengeführt werden, abhängig von zulässiger Last an dem Server und sonstiger Heuristik, um auf die Daten zuzugreifen; oder ein Dienst wird von einem Server transportiert und zwischen zwei Servern aufgeteilt, wobei sich der Dienst in diesem Fall zu beiden Servern bewegt, und wobei die relevanten Daten in Form verschiedener Benutzer auf zwei Server aufgeteilt werden können.

10. Systemarchitektur nach einem der Ansprüche 1 bis 9, wobei das Lastausgleichsexpertensystem auf einem einzelnen Server betrieben wird oder einem Cluster von Servern.

11. Systemarchitektur nach einem der vorstehenden Ansprüche, wobei die Architektur zusätzlich ein oder mehrere Benutzerlösungsdefinitions- oder Lösungsauswahlexpertensysteme umfasst, die so betrieben werden können, dass mindestens eine Lösung angewandt oder mindestens eine Lösung ausgewählt wird.

12. Systemarchitektur nach einem der vorstehenden Ansprüche, wobei ein Server einen oder mehrere Dienste aufweist, die auf dem Server ausgeführt werden, welche die Server nach Einstellungen und Last abfragen, und welche Dienste nach Einstellungen abfragen, wobei eine Mehrzahl von Diensten kommunizieren müssen, wobei somit eine Mehrzahl von Lastausgleichsexpertensystemen umfasst wird; wobei alternativ ein einzelner Lastausgleichsdienst bereitgestellt wird, der alle Dienste abfragt und eine Zusammenfassung der Abfrageergebnisse erhält.

13. Systemarchitektur nach einem der vorstehenden Ansprüche, wobei das Lastausgleichsexpertensystem so angeordnet ist, dass es jedem Anwendungsserver oder Softwareserver eine Reihe von Fragen bezüglich der relativen Erwünschtheit etwaiger Elemente in einer Liste von Ereignisaufgaben, die zuzuordnen sind, präsentiert, und wobei jeder Server oder jeder Softwareserver angeordnet ist, um diese zu klassifizieren und um die Klassifizierung im Zeitverlauf zu modifizieren; und so, dass jedem Dienst eine Reihe von Fragen zur relativen Erwünschtheit eines bestimmten Servers als Host präsentiert wird, wobei Dienste so angeordnet sind, dass sie auf der Basis der Notwendigkeit klassifiziert werden für die auf den Servern vorhandenen Daten; und ferner so, dass jeder Server oder Softwareserver in Bezug auf dessen Durchsatz und Latenz abgefragt wird, Antworten empfängt und entscheidet, ob die Notwendigkeit besteht, die Last an einem bestimmten Server zu reduzieren, wobei die Liste der Zuständigkeiten geprüft und Heuristik eingesetzt wird, wie etwa RAM und eine verfügbare CPU, um eine Sortierung nach Unerwünschtheit vorzunehmen, um eine Auswahl zu treffen und diese einem Server oder einem Softwareserver anzubieten, der eine hohe Erwünschtheit meldet oder an einen Server oder Softwareserver, der zumindest stark ausgelastet ist.

14. Systemarchitektur nach einem der vorstehenden Ansprüche, wobei das System ein integriertes Server-Clustering und eine Umschaltung **dadurch** bereitstellt, dass der eine oder die mehreren Lastausgleichsserver zu jeder Zeit von einzelner oder Modul-Serverlast in Kenntnis gesetzt werden und kompetent sind, um die Kommunikation zwischen Servern anzuweisen, wobei dies nicht nur die Kommunikation von Daten beinhaltet sondern auch die Übertragung von Daten, wo dies die Interaktion zwischen dem Server und Daten beschleunigt, oder wo Datenanforderung des Host-Servers geringer ist als die des anfordernden Servers und auch die Übertragung von Expertensystemen und Aufgabenzuständigkeiten oder Diensten, wenn diese für einen anderen Dienst geeigneter werden oder effizienter von einem anderen Server betrieben werden können.

15. Systemarchitektur nach einem der vorstehenden Ansprüche, wobei das Lastausgleichsexpertensystem Server-Cluster oder Module kompiliert, so dass alle Expertensysteme und Datenanforderungen lokal für ein Modul sind, und wobei Dienste, welche die gleichen Daten benötigen, für ein Modul lokal sind, oder wobei Module ausgeglichen werden in Bezug auf eine RAM-Überlastung, CPU-Überlastung und andere Metriken.

16. Systemarchitektur nach einem der vorstehenden Ansprüche, wobei für den Fall, dass zwei Lösungen für die Berechnung eines Ereignisses Anwendung finden, diese in separaten parallelen Algorithmen behandelt werden, wodurch die Linearität der Kommunikation aufrechterhalten wird.

17. Systemarchitektur nach einem der Ansprüche 3 bis 16, wobei Expertensysteme, welche parallele lineare Algorithmen abarbeiten, in einem Modul-Cluster betrieben werden, wodurch sie auf gemeinsame Informationen und Daten zugreifen können und somit stets den gleichen Datensatz bearbeiten, für den Fall einer Veränderung der Umstände der Anwendung.

18. Systemarchitektur nach einem der vorstehenden Ansprüche, wobei das Lastausgleichsexpertensystem so angeordnet ist, dass es Modulen oder Systemen erlaubt, die parallele Algorithmen abarbeiten und Zugriff auf die gleichen Datensätze erfordern, dem gleichen Server oder Servermodul zugeordnet werden können, wodurch sie direkt auf die Daten zugreifen können, ohne dass es erforderlich ist, Kopien anzufertigen, und ohne dass zeit- und kapazitätsaufwändige Datenanforderungen oder Übertragungsanforderungen erforderlich sind.

19. Systemarchitektur nach einem der vorstehenden Ansprüche, wobei das erfindungsgemäße Lastausgleichsexpertensystem Daten umfasst, die die ganze Anwendung betreffen sowie Teilgruppen dieser, und wobei es die vorherrschende Lösungseffizienz überwacht; und wobei es beim Erkennen eines Effizienzrückgangs automatisch eine Lösungsveränderung für einen beliebigen bestimmten Server auswählt und anweist sowie für jeden bestimmten Dienst auf jedem bestimmten Server zu jeder Zeit, wobei eine Lösung durch die angewiesene Lösung ersetzt wird.

## Revendications

1. Architecture de système pour une application multi-utilisateur nécessitant des transactions de données simultanées massives comprenant dans un système en réseau modulaire de serveurs et de services de réseau :
une pluralité de serveurs d'application assurant l'exécution de services basés sur des données provenant de multiples utilisateurs, un service comprenant une ou plusieurs tâches de traitement applicables aux données non liées au service ;
un ou plusieurs serveurs d'équilibrage de charge ;
une application de connexion de réseau et des serveurs d'équilibrage de charge ;
**caractérisé par** :
un ou plusieurs systèmes experts d'équilibrage de charge ayant accès à un registre de responsabilités de serveur d'application et un registre d'utilisateurs, pouvant fonctionner pour contrôler la charge de serveur d'application et une division de services sur des serveurs d'application individuels et pour diriger un transfert de services entre les serveurs afin de : faciliter et simplifier les calculs nécessitant un accès et/ou un transfert aux données ; et pour distribuer la charge de serveur d'application pour répondre à la capacité de tout serveur d'application ;
dans lequel le système expert d'équilibrage de charge peut fonctionner pour diriger un transfert de services entre les serveurs soit par clonage, sur un second serveur, d'un service fonctionnant sur un premier serveur et arrêt du service cloné fonctionnant sur le premier serveur, soit par activation d'un service préchargé sur un second serveur et arrêt du service correspondant fonctionnant sur un premier serveur.

2. Architecture système selon la revendication 1, dans laquelle soit le système expert d'équilibrage de charge clone l'original et initie le fonctionnement du clone, en arrêtant en même temps l'original et en supprimant subséquemment l'original ; soit les services sont préchargés sur tous les serveurs avant le début d'une application, et le serveur d'équilibrage de charge dirige l'activation d'un service sur un nouveau serveur, arrêtant le même service qui était précédemment en fonctionnement sur un autre serveur.

3. Architecture système selon l'une quelconque des revendications 1 à 2, qui fournit une chaîne de communication linéaire de l'utilisateur au serveur, réduisant la charge sur les serveurs, dans laquelle la communication linéaire est assurée par des services gérant des algorithmes linéaires parallèles. 5

4. Architecture système selon l'une quelconque des revendications 1 à 3, dans laquelle le système expert d'équilibrage de charge peut fonctionner pour distribuer et dynamiquement redistribuer des données et/ou des services parmi les serveurs d'application sur la base de l'une ou de plusieurs des :
(a) premières informations présentant une désirabilité relative des données pour un service ;
(b) deuxièmes informations représentant une désirabilité relative d'un service pour un serveur d' application ; et
(c) troisièmes informations représentant une charge de traitement et/ou une capacité de traitement de secours d'un serveur d'application.

5. Architecture système selon l'une quelconque des revendications 1 à 4, pouvant également fonctionner pour contrôler la division des données originales.

6. Architecture système selon l'une quelconque des revendications 1 à 5, dans laquelle non seulement les requêtes sont équilibrées entre les serveurs, mais également les systèmes experts et services fonctionnant sur les serveurs sont eux-mêmes mobiles, et passent de serveur à serveur pour gérer le changement de modèles d'usage, moyennant quoi les exigences de mémoire et les exigences de calcul sont minimisées, le temps de calcul d'événement et le signalisation sont sensiblement en temps réel et la latence est minimisée.

7. Architecture système selon l'une quelconque des revendications 1 à 6, dans laquelle les pluralités des serveurs d'application sont associées ensemble comme modules, chaque module étant reconfiguré pour fournir une communication intra-module à vitesse et/ou priorité supérieures à la communication inter-module.

8. Architecture système selon la revendication 7, dans laquelle un système expert est configuré pour utiliser :
(i) des services dans un module unique ; et/ou
(ii) des données situées dans un module unique.

9. Architecture système selon l'une quelconque des revendications 1 à 8, dans laquelle le système expert d'équilibrage de charge migre deux tâches d'événement interdépendantes (c'est-à-dire, services) ou systèmes experts vers le même serveur ; ou des données associées se rassemblent et les services se rassemblent avec la position finale des données, sous réserve de la charge autorisable sur le serveur et autres heuristiques, afin d'accéder aux données ; ou un service est déplacé depuis un serveur et séparé entre deux serveurs, auquel cas le service se déplace vers les deux serveurs, et les données applicables sous la forme de différents utilisateurs, peuvent être séparées entre les deux serveurs.

10. Architecture système selon l'une quelconque des revendications 1 à 9, dans laquelle le système expert d'équilibrage de charge fonctionne sur un serveur unique ou un groupe de serveurs.

11. Architecture système selon l'une quelconque des revendications précédentes, qui comprend de plus un ou plusieurs systèmes experts de sélection de solution ou de définition de solution utilisateur pouvant fonctionner pour appliquer au moins une solution ou sélectionner au moins une solution.

12. Architecture système selon l'une quelconque des revendications précédentes, dans laquelle un serveur comprend un ou plusieurs services fonctionnant dessus qui interrogent les serveurs sur des préférences et la charge, et interrogent les services sur des préférences, une pluralité de services devant communiquer, comprenant en conséquence une pluralité de systèmes experts d'équilibrage de charge ; en variante, un service d'équilibrage de charge unique est fourni et interroge tous les services et obtient un résumé des résultats d'interrogation.

13. Architecture système selon l'une quelconque des revendications précédentes, dans laquelle le système expert d'équilibrage de charge est agencé pour présenter à chaque serveur d'application ou serveur logiciel un jeu de questions sur la désirabilité relative de tout élément d'une liste de tâches d'événements ou services devant être alloués et chaque serveur ou serveur logiciel est agencé pour les classer, et modifier ce classement avec le temps ; et également pour présenter à chaque service un jeu de questions sur la désirabilité relative d'un serveur donné comme hôte, moyennant quoi les services sont agencés pour les classer sur la base de la nécessité pour les données présentes sur les serveurs ; et également pour interroger chaque serveur ou serveur logiciel sur son rendement et sa latence, recevoir des réponse et décider s'il est nécessaire de réduire la charge sur tout serveur donné, en étudiant la liste de responsabilités et en utilisant les heuristiques telles qu'une RAM et la CPU disponible pour trier par indésirabilité, pour en sélectionner un et le proposer à un serveur ou serveur logiciel indiquant une désirabilité élevée ou un serveur ou serveur logiciel qui est au moins fortement chargé.

14. Architecture système selon l'une quelconque des revendications précédentes, qui fournit un regroupement et changement de serveur intégré au moyen du ou des serveurs d'équilibrage de charge informés de la charge de serveur de module et individuelle à un moment et compétents pour diriger la communication entre les serveurs, y compris non seulement la communication de données mais le transfert de données lorsque cela accélère l'interaction entre serveur et données ou lorsque la nécessité de données par le serveur hôte est inférieure à celle du serveur demandeur, et également le transfert de systèmes experts et responsabilités de tâche ou services où ces derniers deviennent plus appropriés pour un autre serveur ou peuvent être gérés plus efficacement depuis un autre serveur.

15. Architecture système selon l'une quelconque des revendications précédentes, dans laquelle le système expert d'équilibrage de charge compile les groupes ou modules de serveurs de sorte que tous les besoins en système expert et données sont locaux sur le module et des services ayant besoin des mêmes données sont locaux sur un module, ou les modules sont équilibrés en termes de surcharge de RAM, surcharge CPO et autres mesures.

16. Architecture système selon l'une quelconque des revendications précédentes, dans laquelle au cas où deux solutions s'appliquent pour calculer un événement, elles sont traitées dans des algorithmes parallèles séparés, maintenant ainsi la linéarité de communication.

17. Architecture système selon l'une quelconque des revendications 3 à 16, dans laquelle les systèmes experts gérant des algorithmes linéaires parallèles sont gérés dans un groupe de modules moyennant quoi ils peuvent accéder aux informations et données communes et fonctionnent en conséquence toujours sur le même jeu de données, en cas de changement des circonstances de l'application.

18. Architecture système selon l'une quelconque des revendications précédentes, dans laquelle le système expert d'équilibrage de charge est agencé pour permettre aux modules ou systèmes gérant des algorithmes parallèles et nécessitant l'accès aux mêmes jeux de données devant être attribués au même serveur ou module de serveurs moyennant quoi ils peuvent accéder directement aux données sans devoir faire de copies, et sans nécessité de requêtes de transfert ou de requêtes de données consommant temps et capacité.

19. Architecture système selon l'une quelconque des revendications précédentes, dans laquelle le système expert d'équilibrage de charge de l'invention comprend des données relatives à l'application entière et à leurs sous jeux et contrôle l'efficacité de la solution prévalente ; et en détectant une diminution d'efficacité, il sélectionne automatiquement et ordonne un changement de solution pour tout serveur donné et tout service donné sur tout serveur donné à tout time donné, moyennant quoi une solution est remplacée par la solution indiquée.
